# EUROPÄISCHE PATENTSCHRIFT

(11) **EP 0 599 393 B1**
(45) Veröffentlichungstag und Bekanntmachung des Hinweises auf die Patenterteilung: **07.02.1996**
(21) Anmeldenummer: 93203207.1
(22) Anmeldetag: 16.11.1993
(51) Int. Cl.: B23B 27/10, B23C 5/28

(54) **Schneidwerkzeug**
Cutting tool
Outil de coupe

(30) Priorität: 20.11.1992 AT 2304/92
(43) Veröffentlichungstag der Anmeldung: 01.06.1994
(73) Patentinhaber: PLANSEE TIZIT GESELLSCHAFT M.B.H., A-6600 Reutte/Tirol (AT)
(72) Erfinder: Falger, Friedrich, Dipl.-Ing., A-6600 Ehenbichl (AT)
(74) Vertreter: Lohnert, Wolfgang, Dr.

(56) Entgegenhaltungen:
- EP-A- 0 100 376
- DE-A- 3 740 814
- DE-U- 1 696 379
- FR-A- 2 422 468
- US-A- 4 720 216
- PATENT ABSTRACTS OF JAPAN vol. 5, no. 135 (M-85) 27. August 1981 & JP-A-56 069 007 (MITSUBISHI METAL CORP) 10. Juni 1981
- PATENT ABSTRACTS OF JAPAN vol. 12, no. 190 (M-704) 3. Juni 1988 & JP-A-62 297 044 (DAIDO STEEL CO LTD) 24. Dezember 1987
- PATENT ABSTRACTS OF JAPAN vol. 6, no. 14 (M-108) 27. Januar 1982 & JP-A-56 134 113 (TOSHIBA TUNGALOY CO LTD) 20. Oktober 1981
- PATENT ABSTRACTS OF JAPAN vol. 7, no. 55 (M-198) 5. März 1983 & JP-A-57 201 113 (TOKYO SHIBAURA DENKI KK) 9. Dezember 1982

## Beschreibung

Die Erfindung betrifft ein Schneidwerkzeug mit integrierter Kühlmittelzufuhr, bestehend aus einem Werkzeuggrundkörper mit einer oder mehreren Mittelloch-Wendeschneidplatten, die mittels eines das Mittelloch durchsetzenden Befestigungselementes am Werkzeuggrundkörper auswechselbar befestigt sind und wobei die Kühlmittelzufuhr mit Hilfe des Befestigungselementes durch das Mittelloch erfolgt.

Schneidwerkzeuge mit Wendeschneidplatten unterliegen teilweise je nach Anwendung des Werkzeuges und der Schneidenform der Wendeschneidplatten extrem hohen Belastungen, die selbst bei Verwendung von Wendeschneidplatten aus hochharten Schneidstoffen, wie Hartmetall, Keramik oder ähnlichen Werkstoffen, durch extreme Zerspanungsleistung oder überhöhte thermische Beanspruchung der Wendeschneidplatten zu einem frühzeitigen Verschleiß der Wendeschneidplatten führen. Um diesen frühzeitigen Verschleiß zu reduzieren ist es üblich, bei extremen Schneidoperationen durch Zufuhr eines flüssigen Kühlmittels an die Wärmeentstehungszonen, dort wo mechanische Energie in Wärmeenergie umgesetzt wird (Trenngebiet an der Schneidkante, Scherebene, Reibungszone zwischen Werkzeug und Span und zwischen Werkstück und Freifläche), eine übermäßige Erhitzung der Wendeschneidplatten zu vermeiden und zusätzlich die Späne möglichst rasch abzuführen.
In der Regel wird dazu das Kühlmittel von verstellbaren Austrittsöffnungen an der Werkzeugmaschine oder am Werkzeug in freiem Strahl auf die Schneidkanten der Wendeschneidplatten oder in deren unmittelbare Umgebung geleitet.

Nachteilig bei einer derartigen Art der Kühlmittelzufuhr ist es, daß der Kühlmittelstrahl vielfach nicht genau genug positioniert werden kann oder daß es insbesondere bei rotierenden Schneidwerkzeugen durch das Umlaufen des Werkzeugs zu Unterbrechungen der Kühlmittelzufuhr kommen kann, wodurch es zu einer ungenügenden Wärmeabfuhr bzw. Kühlung der Schneidkanten kommt. Gleichzeitig werden die abgescherten Späne vom Kühlmittel nicht schnell genug oder nicht wirksam genug vom Bereich der Zerspanungszonen entfernt.

Um diesen Nachteil zu vermeiden ist man dazu übergegangen, das Kühlmittel durch Kanäle im Inneren des Werkzeuggrundkörpers, die in Kanäle an der Oberfläche der Schneideinsätze oder in Kanäle, welche die Schneideinsätze durchsetzen, münden, direkt an die Schneidkanten der Wendeschneidplatten heranzuführen.

Die DE-OS 37 40 814 beschreibt beispielsweise Werkzeuge mit gekühlten Schneideinsätzen, bei denen im Falle von Wendeschneidplatten ohne Mittelloch-Bohrung das Kühlmittel über Kanäle im Werkzeuggrundkörper, die in offene Nuten an der Spanfläche der Wendeschneidplatte führen und die über den Spanbrecher des Werkzeuges geschlossen werden, unmittelbar an die Schneidkante herangeführt wird. Als Beispiel für die Kühlung von Wendeschneidplatten mit Mittelloch-Befestigung ist die Zuführung des Kühlmittels über einen geschlossenen Kanal im Werkzeuggrundkörper, der in die Unterlagsplatte der Wendeschneidplatte mündet und von dort über geschlossene Kanäle, welche die Wendeschneidplatte durchsetzen, direkt an die Schneidkanten geführt wird, aufgezeigt.
Ähnliche Ausführungen werden in der EP 0 100 376 beschrieben.

Nachteilig bei derartigen Ausführungen ist, daß die Herstellung der Wendeschneidplatten mit den innenliegenden, meist schrägen Kühlmittelkanälen sehr aufwendig ist. Die Kühlmittelkanäle müssen in die Wendeschneidplatten entweder beim Pressen mit komplizierten Schieberwerkzeugen oder nach dem Pressen durch aufwendige und teure Abtragverfahren, z. B. durch Funkenerosion, eingebracht werden.

Die US-PS 4 720 216 beschreibt ein Schneidwerkzeug mit einem zylinderförmigen Schneideinsatz mit Mittelloch der über ein schraubenförmiges Befestigungselement mit Senkkopf mit dem Werkzeuggrundkörper verbunden ist. Die Kühlmittelzufuhr an den im Einsatz stehenden Schneidkantenabschnitt erfolgt über eine Bohrung im Zentrum des Befestigungselementes, die in eine Abflachung des Senkkopfes mündet.
Nachteilig bei dieser Ausführung ist, daß das Befestigungselement durch die Bohrung erheblich geschwächt wird und die Herstellung der Bohrung und der Abflachung am Senkkopf relativ aufwendig sind.

Die Aufgabe der vorliegenden Erfindung ist es, ein Schneidwerkzeug mit einer oder mehreren gekühlten Mittelloch-Wendeschneidplatten zur Verfügung zu stellen, bei dem das Kühlmittel in ausreichendem Maße kontinuierlich an die Schneidkanten herangeführt wird und bei dem die dazu notwendigen Kühlmittelkanäle im Bereiche der Wendeschneidplatten auf einfache und kostengünstige Weise hergestellt werden können, ohne daß die Wendeschneidplatten oder Befestigungselemente in nachteiliger Weise übermäßig geschwächt sind.

Erfindungsgemäß wird dies dadurch erreicht, daß zur Kühlmittelzufuhr an den Schneidkantenbereich an der Berührungsfläche zwischen Mittelloch-Wandung und Befestigungselement jeweils eine oder mehrere das ganze Mittelloch durchsetzende Nuten in die Mittelloch-Wandung eingearbeitet sind.

Auf diese Art und Weise wird erreicht, daß die Kühlmittelkanäle als vorerst offene Nuten ohne zusätzlichen Arbeitsschritt in der Wendeschneidplatte während des Preßvorganges hergestellt werden können.

Überraschenderweise hat sich gezeigt, daß auch ohne direkte Hinleitung des Kühlmittels an den im Einsatz befindlichen Schneidkantenbereich eine ausreichende Kühlung der Wendeschneidplatten und ein guter Abtransport der Späne erreicht wird. Die Befestigung der Wendeschneidplatten mit dem Werkzeuggrundkörper kann durch die unterschiedlichsten Befestigungselemente, wie Klemmschrauben, Exzenter oder Kippbolzen erfolgen. Durch das Befestigungselement werden dann die offenen Nuten in der Wendeschneidplatte zu einem geschlossenen Kühlkanal ausgebildet. Die Zufuhr des Kühlmittels in die erfindungsgemäßen Kühlmittelzuführungen erfolgt durch Kanäle im Werkzeuggrundkörper, die entweder an der Auflagefläche der Wendeschneidplatten direkt in das Mittelloch und/oder in Nuten mündet, die vom Rand der Wendeschneidplatten zum Mittelloch führen.

Besonders vorteilhaft ist es, wenn die Nuten in der Mittelloch-Wandung durch eine Ringnut in der Auflagefläche der Wendeschneidplatte miteinander in Verbindung stehen.

Ebenso vorteilhaft ist es, wenn die Nuten in der Mittelloch-Wandung oder die diese Nuten verbindende Ringnut in eine oder mehrere Nuten, die in die Auflagefläche der Wendeschneidplatte eingebracht sind, münden. Auch diese Nuten können ohne zusätzlichen Arbeitsschritt beim Preßvorgang der Wendeschneidplatte ausgebildet werden.

In den Fällen, wo eine besonders starke Beanspruchung der Wendeschneidplatte vorliegt, kann es sinnvoll sein, diese Nuten nicht in die Auflagefläche der Wendeschneidplatte sondern in die Auflagefläche des Werkzeuggrundkörpers einzuarbeiten.

Eine besonders bevorzugte Ausführung des Schneidwerkzeuges als Fräswerkzeug mit im wesentlichen rechteckigen Mittelloch-Wendeschneidplatten sieht vor, daß in die Mittelloch-Wandung jeder Wendeschneidplatte vier Nuten eingearbeitet sind, die jeweils auf die Mitte der einzelnen Schneidkanten ausgerichtet sind und daß in die Auflagefläche der Wendeschneidplatten vom Rand der Wendeschneidplatten in die Nuten der Mittelloch-Wandung oder in die Ringnut mündende Nuten eingearbeitet sind.

Auf diese Art und Weise wird eine besonders intensive Kühlung der gesamten Wendeschneidplatte erreicht und gleichzeitig wiederum eine besonders leichte Einarbeitung der Nuten direkt beim Preßvorgang der Wendeschneidplatte ohne zusätzlichen Arbeitsschritt ermöglicht.

Als besonders bevorzugtes Befestigungselement für die Wendeschneidplatten ist eine Senkkopfschraube geeignet. Durch die Verwendung eines konusförmigen Schraubenkopfes, der in ein entsprechend trompetenförmig geformtes Mittelloch der Wendeschneidplatten eingreift, wird eine besonders gute Leitung des Kühlmittels unmittelbar an den Schneidkantenbereich erreicht.

Nachfolgend wird ein Ausführungsbeispiel der Erfindung anhand von Figur näher erläutert.

Es zeigen:
- Figur 1: einen erfindungsgemäß ausgeführten Schaftfräser
- Figur 2a: Wendeschneidplatte des Schaftfräsers nach Figur 1 in der Draufsicht
- Figur 2b: die Wendeschneidplatte nach Figur 2a in perspektivischer Ansicht
- Figur 3a: eine Detailansicht des Schaftfräsers nach Figur 1, die die Kühlmittelzufuhr an die Wendeschneidplatte zeigt
- Figur 3b: den Schnitt A-A nach Detailzeichnung 3a
- Figur 3c: den Schnitt B-B nach Detailzeichnung 3a
- Figur 4a: eine weitere Ausführung einer Wendeschneidplatte für ein erfindungsgemäßes Schneidwerkzeug in der Draufsicht
- Figur 4b: die Wendeschneidplatte nach Figur 4a in der Rückansicht
- Figur 4c: die Wendeschneidplatte nach Figur 4a in perspektivischer Ansicht

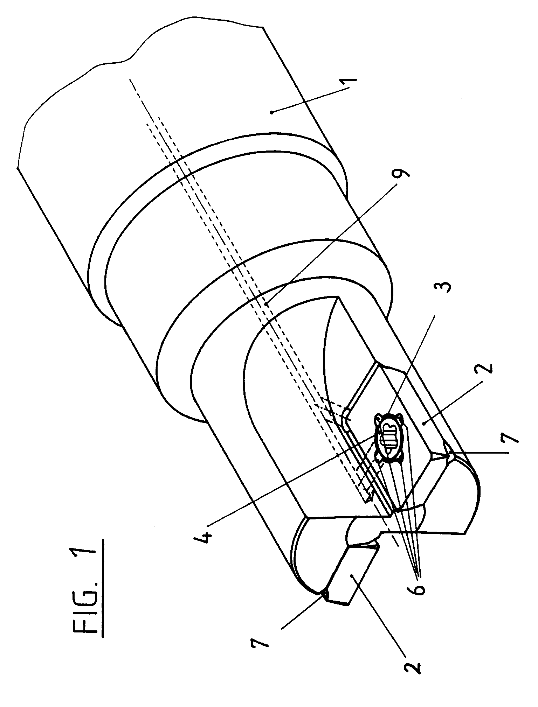

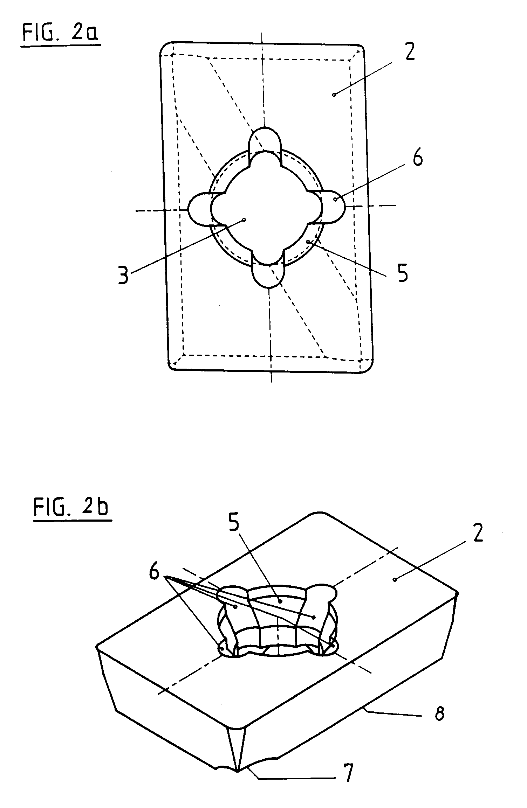

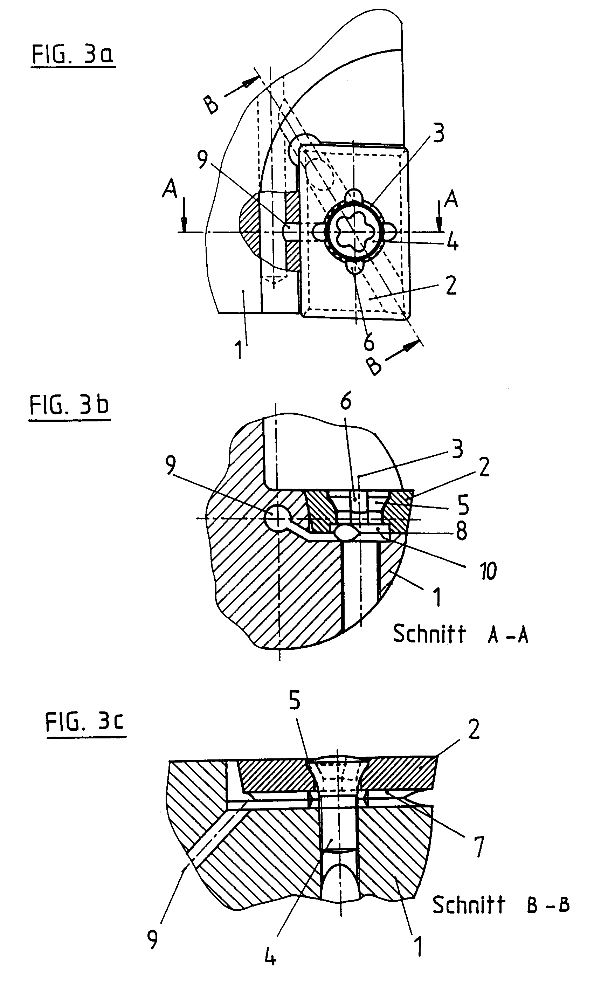

Figur 1 zeigt ein Schneidwerkzeug in Form eines Schaftfräsers. Der Fräser weist zwei rechteckige Mittelloch-Wendeschneidplatten -2- auf, die an der Stirnseite des Werkzeuggrundkörpers -1- in entsprechenden Ausnehmungen auswechselbar durch Senkkopfschrauben befestigt sind. Zur Zufuhr eines Kühlmittels an den unmittelbaren Schneidkantenbereich der Wendeschneidplatten -2- weist jede Wendeschneidplatte, wie insbesondere auch aus den Fig. 2a und 2b zu entnehmen ist, vier in die Mittelloch-Wandung -5-eingearbeitete, das Mittelloch vollständig durchsetzende Nuten -6- auf, die dann bei eingeschraubter Befestigungsschraube -4-als geschlossene Kanäle ausgebildet sind. Die Nuten -6- sind jeweils auf den Mittelabschnitt der vier Schneidkanten ausgerichtet, sodaß auch bei einem Wechsel der Wendeschneidplatte -2- der Zufluß des Kühlmittels an die jeweils im Einsatz befindlichen Schneidkanten gewährleistet ist. Durch eine Ringnut -10- in der Auflagefläche -8- der Wendeschneidplatte -2- stehen die Nuten -6- miteinander in Verbindung. Zur Zufuhr des Kühlmittels in die durch die Nuten -6- gebildeten Kanäle weisen die Wendeschneidplatten -2- an ihrer Auflagefläche -8- eine diagonal von einer Schneidecke zur anderen verlaufende Nut -7- auf, die in die Ringnut -10-mündet.
Aus den Figuren 3a bis 3c ist detailliert die Kühlmittelzufuhr über den Werkzeuggrundkörper -1- an die Wendeschneidplatten -2-zu sehen. Der Werkzeuggrundkörper -1- weist einen zentral in Längsrichtung verlaufenden Kühlmittelkanal -9- auf, der über zwei Seitenkanäle einmal in die diagonal verlaufende Nut -7-der Wendeschneidplatte -2- und einmal direkt in die Ringnut -10- mündet.

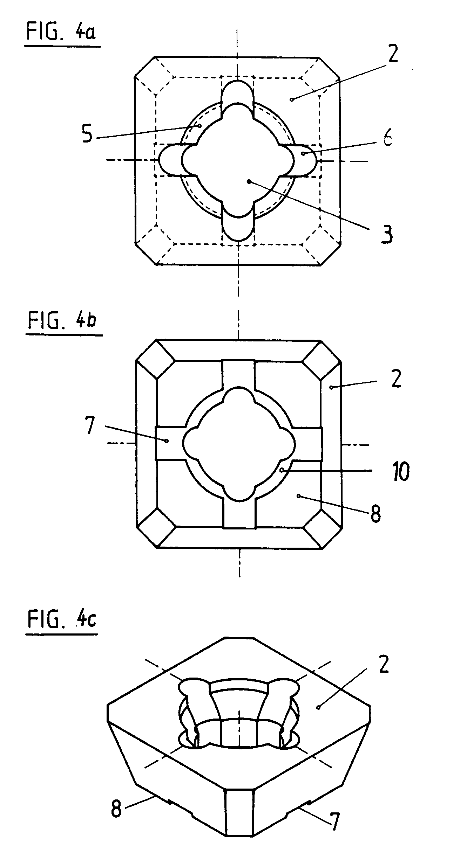

Die Wendeschneidplatte -2- entsprechend den Figuren 4a bis 4c als weitere Ausführungsform für ein Schneidwerkzeug weist ebenfalls in der Mittelloch-Wandung -5-vier auf den Mittelbereich jeder Schneidkante ausgerichtete Nuten -6- auf. In die Auflagefläche -8- der Wendeschneidplatte sind zwei sich kreuzende Nuten -7- eingearbeitet, die ebenfalls auf den Mittelbereich jeder Schneidkante ausgerichtet sind. Im Bereich des Mittelloches -3- münden diese Nuten -7- wiederum in eine ringförmige Nut, die die Nuten -6- miteinander verbindet.

## Patentansprüche

1. Schneidwerkzeug mit integrierter Kühlmittelzufuhr, bestehend aus einem Werkzeuggrundkörper (1) mit einer oder mehreren Mittelloch-Wendeschneidplatten (2), die mittels eines das Mittelloch (3) durchsetzenden Befestigungselementes (4) am Werkzeuggrundkörper (1) auswechselbar befestigt sind und wobei die Kühlmittelzufuhr mit Hilfe des Befestigungselementes durch das Mittelloch erfolgt,
**dadurch gekennzeichnet**, daß zur Kühlmittelzufuhr an den Schneidkantenbereich an der Grenzfläche zwischen Mittelloch-Wandung (5) und Befestigungselement (4) jeweils eine oder mehrere, das ganze Mittelloch (3) durchsetzende Nuten (6) in die Mittelloch-Wandung (5) eingearbeitet sind.

2. Schneidwerkzeug nach Anspruch 1, dadurch gekennzeichnet, daß die Nuten (6) durch eine Ringnut (10) in der Auflagefläche (8) der Wendeschneidplatte miteinander in Verbindung stehen.

3. Schneidwerkzeug nach Anspruch 1 oder 2, dadurch gekennzeichnet, daß die Nuten (6) oder die Ringnut (10) in eine oder mehrere Nuten (7) in der Auflagefläche (8) der Wendeschneidplatte (2) münden.

4. Schneidwerkzeug mit im wesentlichen rechteckigen Mittelloch-Wendeschneidplatten nach einem der Ansprüche 1 bis 3, dadurch gekennzeichnet, daß in die Mittelloch-Wandung (5) jeder Wendeschneidplatte (2) vier Nuten (6) eingearbeitet sind, die jeweils auf die Mitte der einzelnen Schneidkanten ausgerichtet sind.

5. Schneidwerkzeug nach Anspruch 4, dadurch gekennzeichnet, daß in die Auflagefläche (8) der Wendeschneidplatten (2) vom Rand der Wendeschneidplatten (2) in die Nuten (6) oder in die Ringnut (10) mündende Nuten (7) eingearbeitet sind.

6. Schneidwerkzeug nach einem der Ansprüche 1 bis 5, dadurch gekennzeichnet, daß das Befestigungselement (4) eine Senkkopfschraube ist.

## Claims

1. Cutting tool with an integrated coolant supply, comprising a tool basic body (1) having one or more centre-hole indexable inserts (2), which are exchangeably fastened to the tool basic body (1) by means of a fastening element (4) which penetrates the centre hole (3), and wherein the coolant supply is effected through the centre hole with the aid of the fastening element, characterized in that,
for supplying coolant to the cutting edge region, at the interface between centre-hole wall (5) and fastening element (4) in each case one or more grooves (6) are worked into the centre-hole wall (5) and penetrate the entire centre hole (3).

2. Cutting tool according to claim 1, characterized in that the grooves (6) are connected to one another by an annular groove (10) in the supporting surface (8) of the indexable insert.

3. Cutting tool according to claim 1 or 2, characterized in that the grooves (6) or the annular groove (10) open into one or more grooves (7) in the supporting surface (8) of the indexable insert (2).

4. Cutting tool having substantially rectangular centre-hole indexable inserts according to one of claims 1 to 3, characterized in that worked into the centre-hole wall (5) of each indexable insert (2) are four grooves (6) which are each directed towards the centre of the individual cutting edges.

5. Cutting tool according to claim 4, characterized in that worked into the supporting surface (8) of the indexable inserts (2) are grooves (7) which open from the edge of the indexable inserts (2) into the grooves (6) or into the annular groove (10).

6. Cutting tool according to one of claims 1 to 5, characterized in that the fastening element (4) is a countersunk screw.

## Revendications

1. Outil de coupe à amenée de milieu de refroidissement intégrée, qui se compose d'un corps de base (1) d'outil pourvu d'une ou plusieurs plaquettes réversibles (2) à orifice central, qui sont fixées de façon interchangeable sur le corps de base (1) d'outil au moyen d'un élément de fixation (4) qui traverse l'orifice central (3), et dans lequel l'amenée du milieu de refroidissement est réalisée à l'aide de l'élément de fixation à travers l'orifice central,
caractérisé en ce qu'une ou plusieurs encoches (6) qui traversent chacune tout l'orifice central (3) sont respectivement ménagées dans la paroi (5) de l'orifice central à la surface de frontière entre la paroi (5) de l'orifice central et l'élément de fixation (4) en vue d'amener le milieu de refroidissement dans la zone des arêtes de coupe.

2. Outil de coupe selon la revendication 1, caractérisé en ce que les encoches (6) sont reliées entre elles par une encoche annulaire (10) ménagée dans la surface d'appui (8) de la plaquette réversible.

3. Outil de coupe selon la revendication 1 ou 2, caractérisé en ce que les encoches (6) ou l'encoche annulaire (10) débouchent dans une ou plusieurs encoches (7) ménagées dans la surface d'appui (8) de la plaquette réversible (2).

4. Outil de coupe à plaquettes réversibles sensiblement rectangulaires à orifice central selon l'une des revendications 1 à 3, caractérisé en ce que quatre encoches (6), qui sont respectivement orientées vers le milieu des arêtes de coupes individuelles sont ménagées dans la paroi (5) d'orifice central de chaque plaquette réversible (2).

5. Outil de coupe selon la revendication 4, caractérisé en ce que des encoches (7) qui débouchent dans les encoches (6) ou dans l'encoche annulaire (10) sont ménagées dans la surface d'appui (8) des plaquettes réversibles (2) à partir du bord des plaquettes réversibles (2).

6. Outil de coupe selon l'une des revendications 1 à 5, caractérisé en ce que l'élément de fixation (4) est une vis à tête fraisée.
